# EUROPÄISCHE PATENTANMELDUNG

(11) **EP 0 666 274 A2**
(43) Veröffentlichungstag der Anmeldung: **09.08.1995**
(21) Anmeldenummer: 94119016.7
(22) Anmeldetag: 02.12.1994
(51) Int. Cl.: C08F 212/04, C08F 236/10, D21H 17/35

(54) **Dispersionen sowie daraus hergestellte Papierstreichfarben für die Papierbeschichtung**

(30) Priorität: 07.02.1994 DE 4403674
(71) Anmelder: HÜLS AKTIENGESELLSCHAFT, D-45764 Marl (DE)
(72) Erfinder: Türck, Ulrich, Dr., D-45772 Marl (DE); Schwengers, Hans-Peter, Dr., D-46286 Dorsten (DE)

(57) **Zusammenfassung**

Die vorliegende Erfindung betrifft Dispersionen sowie darus hergestellte Papierstreichfarben für die Papierbeschichtung mit verbesserter Blisterresistenz.

Wäßrige Dispersionen auf Basis von (Meth)acrylsäure-haltigen SBR-Copolymeren,
erhältlich durch Emulsionspolymerisation von
A) 50 bis 70 Massen-% Vinylaromaten,
B) 25 bis 50 Massen-% konjugierten Dienen,
C) 2 bis 6 Massen-% α,β-ungesättigten Carbonsäuren,
D) 0 bis 20 Massen-% Nitrilen von α,β-ungesättigten Carbonsäuren,
E) 0 bis 1 Massen-% (Meth)acrylamid sowie
üblichen Polymerisationsreglern, sulfat- oder sulfonatgruppenhaltigen Emulgatoren, Initiatoren und gegebenenfalls weiteren Hilfs- und Zuschlagstoffen, wobei man im semikontinuierlichen Zulaufverfahren arbeitet und die Gesamtmenge an (Meth)-acrylsäure von 0 bis 70 % der Zulaufzeit, vorzugsweise von 0 bis 40 %, der Hauptmonomeren dosiert.

## Beschreibung

Die vorliegende Erfindung betrifft Dispersionen sowie daraus hergestellte Papierstreichfarben für die Papierbeschichtung mit verbesserter Blisterresistenz.

Für die Beschichtung von Papier zum Zwecke der Qualitätsverbesserung hinsichtlich Glätte, Glanz, Weißgrad, Bedruckbarkeit etc. werden hochgefüllte wäßrige Streichfarben eingesetzt, die aus Weißpigmenten, Bindemitteln, Emulgier- und sonstigen Hilfsmitteln bestehen. Als Bindemittel haben sich synthetische Copolymere auf Basis Styrol/Butadien bewährt, da diese in Form wäßriger Dispersionen mit niedriger Viskosität und hohem Feststoffgehalt herzustellen sind. Darüber hinaus verleihen sie der Beschichtung eine gute Naß- und Trockenrupffestigkeit, gute Flexibilität, hohen Glanz und eine gute Bedruckbarkeit. Durch Modifizierung der Copolymere mit kleinen Mengen weiterer Comonomeren können die Eigenschaften der Dispersion zusätzlich günstig beeinflußt werden.

Die hohen Druckgeschwindigkeiten moderner Druckmaschinen speziell im Rollenoffset-Bereich bedingen kurze Trocknungszeiten und hohe Trocknungstemperaturen für das bedruckte Papier und damit hohe Anforderungen an die Blisterresistenz der Papierbeschichtung. Die Blisterresistenz ist dabei definiert durch die Temperatur, bei der Blasenbildung bzw. punktuelles Abplatzen der Beschichtung auftritt, was insbesondere nach dem Mehrfarben-Offsetdruck zu Fehlchargen führt.

Es ist bekannt, daß die Blisterresistenz von mit Kaolin und Calciumcarbonat gefüllten Papierbeschichtungen von einer Reihe von Faktoren, wie Alter, Beschichtungsgewicht, Porosität und Bindemittelgehalt abhängig ist (Ind. Carta 1980, 18(10), 444-9). Da diese Parameter jedoch weitgehend durch die Praxisanforderungen vorgegeben sind, ist eine gezielte Beeinflussung über diese Faktoren kaum möglich.

In der JP 88 284 209 A2 wird beschrieben, daß man die Blisterresistenz einer mit Kaolin, Calciumcarbonat und oxidierter Stärke gefüllten Papierbeschichtung mit einem Bindemittel auf Basis Styrol/Butadien/Methylmethacrylat/Acrylnitril/Itaconsäure/Acrylsäure verbessern kann, wenn man 6 bis 40 % des Gesamtmonomerengemisches zusammen mit der ungesättigten Säure im Batch vorpolymerisiert und den Rest des Monomerengemisches zusammen mit einem nichtionischen Emulgator kontinuierlich oder intermittierend der weiteren Copolymerisation zuführt. Nachteilig hierbei ist, daß bei Verwendung von nichtionischen Emulgatoren eine erhöhte Wasserempfindlichkeit der Papierbeschichtung in Kauf genommen werden muß.

Aufgabe der vorliegenden Erfindung war, wäßrige Dispersionen bereitzustellen, welche als Bindemittel in Papierstreichfarben einer daraus hergestellten Papierbeschichtung eine verbesserte Blisterresistenz verleiht, unter Erhalt der übrigen relevanten Qualitätskriterien.

Es wurde nun überraschend gefunden, daß die Blisterresistenz einer Papierbeschichtung deutlich verbessert werden kann, wenn diese Dispersionen gemäß Anspruch 1 enthalten.

Gegenstand der vorliegenden Erfindung sind Dispersionen erhältlich durch Emulsionspolymerisation von Monomergemischen, bestehend aus A) 50 bis 70 Massen-% Vinylaromaten, B) 25 bis 50 Massen-% konjugierten Dienen, C) 2 bis 6 Massen-% α,β-ungesättigten Carbonsäuren, D) 0 bis 20 Massen-% Nitrilen von α,β-ungesättigten Carbonsäuren und E) 0 bis 1 Massen-% (Meth)acrylamid, in Gegenwart von üblicherweise eingesetzten Polymerisationsreglern, sulfat- oder sulfonatgruppenhaltigen Emulgatoren, Initiatoren sowie gegebenenfalls weiteren Hilfs- und Zuschlagstoffen, wobei man im semikontinuierlichen Zulaufverfahren arbeitet und die Gesamtmenge an (Meth)acrylsäure von 0 bis 70 % der Zulaufzeit, vorzugsweise von 0 bis 40 % der Zulaufzeit der Hauptmonomeren dosiert.

Desweiteren sind Papierstreichfarben Gegenstand der vorliegenden Erfindung, die diese Dispersionen enthalten.

Als monomere Vinylaromaten können Styrol, Methylstyrole und Vinyltoluole eingesetzt werden, bevorzugt wird jedoch Styrol. Die konjugierten Diene stammen aus der Gruppe Butadien und Isopren, wobei Butadien bevorzugt verwendet wird.

Die bevorzugt eingesetzten α,β-ungesättigten Carbonsäuren sind Acryl- und Methacrylsäure. Die (Meth)acrylsäure kann teilweise durch andere α,β-olefinisch ungesättigte Carbonsäuren wie Fumarsäure, Maleinsäure, Itaconsäure oder deren Gemische ersetzt werden, wobei deren Anteil in der Säuremischung nicht größer sein soll als der (Meth)acrylsäureanteil. Bevorzugt eingesetzt wird Acrylsäure in Mengen von 3 bis 5 Massen-%, bezogen auf die Gesamtmonomerenmischung. Alle Monomeren können als Einzelkomponenten oder als Gemisch der Emulsionspolymerisation zugeführt werden.

Die erfindungsgemäßen wäßrigen Dispersionen können sowohl auf reinen A/B/C-Copolymeren basieren als auch auf Copolymeren, die noch weitere polymerisierbare Komponenten als Comonomere enthalten.

Als weitere Comonomere D eignen sich Nitrile von α,β-ungesättigten Carbonsäuren insbesondere Acrylnitril, dessen Menge, bezogen auf die Gesamtmonomerenmischung bis zu 20 Massen-% betragen kann. Weiterhin geeignet sind bis zu einem Massen-% Amide der (Meth)acrylsäure (Comonomer E).

Eine bevorzugte Ausführungsform der erfindungsgemäßen Dispersionen beinhaltet den Einsatz von Styrol, Butadien, und (Meth)acrylsäure sowie gegebenenfalls Acrylnitril und (Meth)acrylamid sowie üblicher Polymerisationsregler, sulfat- oder aus sulfonatgruppenhaltiger Emulgatoren, Initiatoren, sowie gegebenenfalls weitere Hilfs- und Zuschlagstoffe.

Zur Stabilisierung der Disperionen werden anionische, Sulfat- oder Sulfonatgruppen-haltige Emulgatoren eingesetzt. Geeignet sind beispielsweise Alkylsulfate oder Alkylsulfonate mit 10 bis 20, vorzugsweise 12 bis 18 C-Atomen in der Alkylkette, Alkylnaphthalinsulfonate mit 4 bis 12 C-Atomen in der Alkylkette, Salze von α-Sulfofettsäuren mit 10 bis 20 C-Atomen in der Kohlenstoffkette, Salze von Sulfobernsteinsäureester (Sulfosuccinate) mit 6 bis 12 C-Atomen in der Alkoholkomponente, Alkyl-diphenylether-sulfonat mit 8 bis 18 C-Atomen in der Alkylkette, Salze von sulfatierten Alkylethoxylaten mit 10 bis 20 C-Atomen in der Alkylkette oder Salze von sulfatierten Alkylphenolethoxylaten mit 8 bis 12 C-Atomen in der Alkylkette mit jeweils einem Ethoxylierungsgrad von 2 bis 40. Die Emulgatoren werden zu 0,01 bis 1,5, vorzugsweise 0,1 bis 0,5 Massen-%, bezogen auf das Monomerengemisch eingesetzt.

Die Initiierung der Emulsionspolymerisation kann mit den üblichen Radikalbildnern wie Peroxiden, Hydroperoxiden oder Azoverbindungen vorgenommen werden. Bevorzugte Initiatoren sind Ammonium-, Natrium- oder Kaliumperoxodisulfat, gegebenenfalls in Kombination mit Natriumbisulfit oder anderen hierfür üblichen Reduktionsmitteln. Wegen seiner guten Wasserlöslichkeit wird Ammoniumperoxodisulfat besonders bevorzugt. Initiatoren und Reduktionsmittel werden in einer Gesamtmenge von 0,1 bis 1,5 Massen-%, bezogen auf das Monomerengemisch verwendet.

Zur Beeinflussung der Vernetzung und des Gelanteils bei der Emulsionspolymerisation werden an sich bekannte Polymerisationsregler eingesetzt. Geeignete Regler sind Mercaptane wie beispielsweise t-Dodecylmercaptan, die in einer Menge von 0,5 bis 2 Massen-%, bezogen auf das Monomerengemisch hinzugefügt werden.

Bei der Emulsionspolymerisation können gegebenenfalls weitere, an sich bekannte Hilfs- und Zuschlagstoffe eingesetzt werden. Beispielhaft genannt seien Puffersalze wie Trikaliumphosphat oder Chelatisierungsmittel wie Ethylendiamintetraacetat.

Die Herstellung der erfindungsgemäßen Dispersionen wird in einem üblichen Polymerisationsreaktor vollentsalztes Wasser (VE-Wasser) mit Teilen des Puffersalzes, Chelatisierungsmittels, Emulgators und Initiators vorgelegt und aufgewärmt. Die Hauptmonomeren A und B werden zusammen mit den anderen Comonomeren, die im Falle der Wasserlöslichkeit als wäßrige Lösungen zubereitet sind, und weiteren wäßrigen Lösungen von Initiator bzw. Emulgator im Zulaufverfahren zudosiert. Die Emulsionspolymerisation wird bei 5 bis 95 °C, vorzugsweise bei 70 bis 90 °C durchgeführt. Der Zulauf erfolgt im allgemeinen in Einzelströmen, jedoch können die Ströme auch als Emulsion vereinigt zudosiert werden. Die Dosierzeit liegt bei 4 bis 7 Stunden, wobei man üblicherweise die Initiator-Lösung etwa 1 Stunde länger laufen läßt als die Hauptmonomeren und die Emulgator-Lösung. Die wesentliche Maßnahme der vorliegenden Erfindung ist die Einstellung der Dosiergeschwindigkeit für den Monomer C enthaltenen Strom, dessen Zulauf bereits bei 70 %, vorzugsweise bei 40 % der Zulaufzeit der Hauptmonomeren A und B beendet sein soll.

Die Emulsionspolymerisation wird so durchgeführt, daß die erfindungsgemäßen Dispersionen einen Feststoffgehalt zwischen 30 und 60 %, vorzugsweise 40 bis 55 %, bezogen auf die Gesamtmasse der Dispersion aufweisen. Der gewünschte Feststoffgehalt kann über das Monomer/Wasser-Verhältnis und/oder durch nachträgliches Aufkonzentrieren eingestellt werden.

Die erfindungsgemäßen Dispersionen werden als Bindemittel in den erfindungsgemäßen Papierstreichfarben eingesetzt, üblicherweise mit Calciumcarbonat, Tonerde und oxidierter Stärke.

Die Herstellung der erfindungsgemäßen Dispersionen sowie der Papierstreichfarben wird in den folgenden Beispielen erläutert.

### Beispiel 1

In einen 40 1-V2A-Polymerisationskessel werden eingefüllt:
58,0 Gew.-Teile VE-Wasser
0,4 Gew.-Teile Trikaliumphosphat
0,01 Gew.-Teile Ethylendiamintetraacetat
0,16 Gew.-Teile C₁₅-Paraffinsulfonat
0,01 Gew.-Teile Ammoniumperoxodisulfat
Der Kessel wird mit Stickstoff gespült und unter Rühren (120 Upm) auf 85 °C aufgeheizt. Nach Erreichen der Reaktionstemperatur wird mit der Zufuhr der Dosierströme 1 bis 3 begonnen:
- Strom 1: 65,0 Gew.-Teile Styrol
28,5 Gew.-Teile Butadien
1,75 Gew.-Teile t-Dodecylmercaptan
- Strom 2: 8,0 Gew.-Teile VE-Wasser
4,5 Gew.-Teile Acrylsäure
0,16 Gew.-Teile C₁₅-Paraffinsulfonat
0,02 Gew.-Teile Trikaliumphosphat
0,004 Gew.-Teile Ethylendiamintetraacetat
- Strom 3: 34,0 Gew.-Teile VE-Wasser
1,0 Gew.-Teile Ammoniumperoxodisulfat
- Strom 4: 12,0 Gew.-Teile VE-Wasser
0,24 Gew.-Teile C₁₅-Paraffinsulfonat
0,03 Gew.-Teile Trikaliumphosphat
0,006 Gew.-Teile Ethylendiamintetraacetat
Die Dosiergeschwindigkeiten sind so eingestellt, daß der Dosierstrom 1 in 5 Stunden, Dosierstrom 2 in 2 Stunden und Dosierstrom 3 in 6 Stunden beendet ist, wobei berücksichtigt ist, daß die drei Ströme 15 Minuten nach Dosierbeginn für 30 Minuten unterbrochen und dann wieder gestartet werden.

Nach 2 Stunden Dosierzeit ist der Dosierstrom 2 aufgebraucht und es wird dann sofort die Emulgatorlösung (Strom 4) dosiert. Der Dosierstrom 4 ist nach 3 Stunden aufgebraucht, gleichzeitig mit Dosierstrom 1. 2 Stunden nach Ende des Dosierstroms 3 wird der Kessel auf Kühlung gesetzt.

Es resultiert ein Latex mit einem Feststoffanteil von 47,6 Massen-%, einem pH-Wert von 3,6 und einer Oberflächenspannung von 46,7 mN/m. Der Latex wird mit Natronlauge auf den pH-Wert von 6,8 eingestellt, mit VE-Wasser auf einen Feststoffanteil von 40 Massen-% verdünnt, 8 Stunden im offenen Topf bei 70 °C gerührt und auf einen Feststoffanteil von 50 Massen-% konzentriert. Der so aufgearbeitete Latex weist folgende Werte auf:

| | |
|---|---|
| Feststoffanteil | 50,8 Massen-% |
| pH-Wert | 6,8 |
| Viskosität (Brookfield) | 80 mPa·s |
| Oberflächenspannung | 40,7 mN/m |
| Teilchengröße (Anzahlverteilung) | 163 nm |
| Teilchengröße (Volumenverteilung) | 175 nm |
| Reststyrol | 390 ppm |
| Pendelhärte | 70 s |

### Vergleichsbeispiel A

In diesem Beispiel wird die Acrylsäure parallel mit den Hauptmonomeren dosiert. Die Dosierströme 2 und 4 sind zu einer Mischung vereinigt, die in 5 Stunden zuläuft. Ansonsten ist die Zusammensetzung, das Verfahren und die Aufarbeitung wie im erfindungsgemäßen Beispiel 1. Es resultiert ein Latex mit folgenden Werten:

| | |
|---|---|
| Feststoffanteil | 50,8 Massen-% |
| pH-Wert | 6,8 |
| Viskosität (Brookfield) | 80 mPa·s |
| Oberflächenspannung | 39,3 mN/m |
| Teilchengroße (Anzahlverteilung) | 167 nm |
| Teilchengröße (Volumenverteilung) | 173 nm |
| Reststyrol | 330 ppm |
| Pendelhärte | 74 s |

### Vergleichsbeispiel B

In diesem Beispiel wird die Acrylsäure überwiegend gegen Ende des Zulaufs dem Reaktor zugeführt. Die Dosierströme 2 und 4 sind vereinigt, enthalten jedoch nur 1 von 4,5 Gew.-Teilen Acrylsäure. Die restlichen 3,5 Gew.-Teile werden der zulaufenden Lösung zum Ende der 4. Stunde zugesetzt. Ansonsten ist die Zusammensetzung, das Verfahren und die Aufarbeitung wie im erfindungsgemäßen Beispiel 1. Es resultiert ein Latex mit den Werten:

| | |
|---|---|
| Feststoffanteil | 50,8 Massen-% |
| pH-Wert | 6,8 |
| Viskosität (Brookfield) | 107 mPa·s |
| Oberflächenspannung | 39,8 mN/m |
| Teilchengröße (Anzahlverteilung) | 183 nm |
| Teilchengröße (Volumenverteilung) | 191 nm |
| Reststyrol | 410 ppm |
| Pendelhärte | 63 s |

### Herstellung von Papierstreichfarben

### Beispiel 2, Vergleichsbeispiele C und D

Die zuvor beschriebenen Latices aus Beispiel 1 und den beiden Vergleichsbeispielen A und B werden als Bindemittel für die Herstellung von Papierstreichfarben verwendet. Dazu werden 10 Gew.-Teile Latex (bezogen auf Feststoffanteil) mit 4 Gew.-Teilen Stärke, 50 Gew.-Teilen Clay und 50 Gew.-Teilen Kreide kombiniert. Der pH-Wert der Dispersionen wird mit NaOH auf 8,5, der Feststoffgehalt mit Wasser auf 63 Massen-% eingestellt. Mit diesen Papierbeschichtungsmassen wird holzhaltiges Rohpapier (50 g/m²) mittels Blade bei einer Streichgeschwindigkeit von 150 m/min beidseitig gestrichen. Das Auftragsgewicht liegt bei 12 g/m². Anschließend wird das gestrichene Papier auf einem Dreiwalzenkalander bei einem Liniendruck von 50 kN/m satiniert.

### Anwendungstechnische Prüfung

Die in Tabelle 1 genannten Eigenschaften dieser so gestrichenen Papiere zur Bedruckbarkeit werden nach verschiedenen Methoden ermittelt:
Der Blistertest liefert eine Aussage darüber, ob Rollenoffsetpapiere bei der Trocknung der Druckfarbe mit Heißluft im Papiergefüge aufplatzen oder nicht. Das zu prüfende Papier wird in eine Heizflüssigkeit entsprechender Temperatur getaucht. Es wird die Temperatur ermittelt, bei der es zur ersten Blasenbildung kommt.

Messungen zur Trockenrupffestigkeit werden in Anlehnung an die Tappi-Norm T-499 durchgeführt. Dabei wird die Strecke der bedruckten Oberfläche bestimmt, nach der Rupfen auftritt. Höhere Zahlen bedeuten eine bessere Strichqualität.

Die Naßrupffestigkeit wird unter Verwendung einer Standard-Prüfbauapparatur und Standarddruckfarben bestimmt. Gearbeitet wird in Anlehnung an die Fogra-Institutsmitteilung 4.202 (1972), "Rupfen im Offsetdruck". Je höher die Note, desto besser das Prüfungsergebnis.

Mit dem K+N-Test wird die Druckfarbenaufnahme der gestrichenen Papieroberfläche in Prozent Weißeverlust bestimmt.

Beim Wegschlagtest wird die Geschwindigkeit der Druckfarbentrocknung erfaßt. Das Papier wird am Probedruckgerät verdruckt. Nach einer Trockenzeit von 30 Sekunden wird ein Gegendruck hergestellt, an dem die Farbdichte gemessen wird. Höhere Werte bedeuten langsamere Druckfarbentrocknung.

Der Druckfarbenübertrag wird am mit Wasser befeuchteten Papier bestimmt. Je geringer die Tendenz zum Naßfarbabstoßen, desto höher ist der Farbübertrag. Gemessen wird der Remissionsverlust in Prozent, d.h. je höher der Wert, um so besser der Druckfarbenübertrag.

**Tabelle 1**

| Prüfungen | Papierbeschichtung aus Latex gemäß | | |
|---|---|---|---|
| | Beispiel 2 | Vergleichsbeispiel C | Vergleichsbeispiel D |
| Blisterresistenz (°C) | 200 | 190 | 190 |
| Trockenrupfen (cm/s) | 51 | 49 | 45 |
| Naßrupfen | 7,1 | 7,0 | 7,0 |
| K+N-Test (% Weißeverlust) | 17,0 | 16,9 | 17,9 |
| Wegschlagtest | 0,56 | 0,50 | 0,46 |
| Farbübertrag (%) | 74 | 75 | 75 |

## Patentansprüche

1. Wäßrige Dispersionen auf Basis von (Meth)acrylsäure-haltigen SBR-Copolymeren,
erhältlich durch Emulsionspolymerisation von
A) 50 bis 70 Massen-% Vinylaromaten,
B) 25 bis 50 Massen-% konjugierten Dienen,
C) 2 bis 6 Massen-% α,β-ungesättigten Carbonsäuren,
D) 0 bis 20 Massen-% Nitrilen von α,β-ungesättigten Carbonsäuren,
E) 0 bis 1 Massen-% (Meth)acrylamid sowie
üblichen Polymerisationsreglern, sulfat- oder sulfonatgruppenhaltigen Emulgatoren, Initiatoren und gegebenenfalls weiteren Hilfs- und Zuschlagstoffen, wobei man im semikontinuierlichen Zulaufverfahren arbeitet und die Gesamtmenge an (Meth)-acrylsäure von 0 bis 70 % der Zulaufzeit, vorzugsweise von 0 bis 40 %, der Hauptmonomeren dosiert.

2. Wäßrige Dispersionen nach Anspruch 1,
dadurch gekennzeichnet,
daß als Monomere A Styrol, Methylstyrole oder Vinyltoluole eingesetzt werden.

3. Wäßrige Dispersionen gemäß den Ansprüchen 1 bis 2,
dadurch gekennzeichnet,
daß als Monomere B Butadien und Isopren eingesetzt werden.

4. Wäßrige Dispersionen gemäß den Ansprüchen 1 bis 3,
dadurch gekennzeichnet,
daß als Monomere C Acryl-, Methacryl-, Fumar-, Malein- oder Itaconsäure eingesetzt werden.

5. Wäßrige Dispersionen gemäß den Ansprüchen 1 bis 4,
dadurch gekennzeichnet,
daß als Monomere D Acrylnitril und Methacrylnitril eingesetzt werden.

6. Wäßrige Dispersionen gemäß den Ansprüchen 1 bis 5,
erhältlich durch Emulsionspolymerisation von
A) 50 bis 70 Massen-% Styrol,
B) 25 bis 50 Massen-% Butadien,
C) 2 bis 6 Massen-% (Meth)acrylsäure,
D) 0 bis 20 Massen-% Acrylnitril,
E) 0 bis 1 Massen-% (Meth)acrylamid sowie
üblichen Polymerisationsreglern, sulfat- oder sulfonatgruppenhaltigen Emulgatoren, Initiatoren und gegebenenfalls weiteren Hilfs- und Zuschlagstoffen, wobei man im semikontinuierlichen Zulaufverfahren arbeitet und die Gesamtmenge an (Meth)-acrylsäure von 0 bis 70 % der Zulaufzeit, vorzugsweise von 0 bis 40 %, der Hauptmonomeren dosiert.

7. Papierstreichfarbe
dadurch gekennzeichnet,
daß Dispersionen nach mindestens einem der Ansprüche 1 bis 6 als Bindemittel enthalten sind.

8. Papierstreichfarbe nach Anspruch 7,
dadurch gekennzeichnet,
daß sie übliche Füllstoffe wie Calciumcarbonat, Tonerde und oxidierte Stärke sowie weitere Hilfsstoffe enthält.

9. Verfahren zur Herstellung wäßriger Dispersionen auf Basis von (Meth)acrylsäure-haltigen SBR-Copolymeren,
erhältlich durch Emulsionspolymerisation von
A) 50 bis 70 Massen-% Vinylaromaten,
B) 25 bis 50 Massen-% konjugierten Dienen,
C) 2 bis 6 Massen-% α,β-ungesättigten Carbonsäuren,
D) 0 bis 20 Massen-% Nitrilen von α,β-ungesättigten Carbonsäuren,
E) 0 bis 1 Massen-% (Meth)acrylamid sowie
üblichen Polymerisationsreglern, sulfat- oder sulfonatgruppenhaltigen Emulgatoren, Initiatoren und gegebenenfalls weiteren Hilfs- und Zuschlagstoffen, wobei man im semikontinuierlichen Zulaufverfahren arbeitet und die Gesamtmenge an (Meth)-acrylsäure von 0 bis 70 % der Zulaufzeit, vorzugsweise von 0 bis 40 %, der Hauptmonomeren dosiert. beitet und die Gesamtmenge an (Meth)-acrylsäure von 0 bis 70 % der Zulaufzeit, vorzugsweise von 0 bis 40 %, der Hauptmonomeren dosiert.

10. Verwendung der Dispersionen nach Anspruch 9, als Bindemittel in Papierstreichfarben.
